# EUROPÄISCHE PATENTSCHRIFT

(11) **EP 2 410 228 B1**
(45) Veröffentlichungstag und Bekanntmachung des Hinweises auf die Patenterteilung: **10.03.2021**
(21) Anmeldenummer: 10007733.8
(22) Anmeldetag: 26.07.2010
(51) Int. Cl.: F16L 33/16, F16L 33/22, F16L 37/098, F16L 37/133, F16L 37/413, F16L 37/138

(54) **Schlauchverschraubung mit Kupplung und Wasserstopp**
Tube connection with coupling and water stop
Raccord à vis pour tuyaux doté d'un accouplement et d'un économiseur d'eau

(30) Priorität: 21.07.2010 DE 202010010500 U
(43) Veröffentlichungstag der Anmeldung: 25.01.2012
(73) Patentinhaber: Silag Handel AG, 40764 Langenfeld/ Rhld (DE)
(72) Erfinder: Klose, Odo Prof., 42285 Wuppertal (DE)
(74) Vertreter: Demski, Siegfried

(56) Entgegenhaltungen:
- EP-A1- 0 340 518
- DE-A1- 3 828 953
- GB-A- 2 054 081
- GB-A- 2 081 409
- GB-A- 2 237 343
- US-A- 4 681 350

## Beschreibung

Die Erfindung betrifft eine Schlauchverschraubung, insbesondere für die Wassertechnik in häuslicher Umgebung oder Anwendungen im Kleingewerbe und Gewerbe, bestehend aus einem Wasserstopp, einer Schlauchaufnahme und einer Kupplung, wobei die Schlauchaufnahme aus einem hohlzylinderförmigen Grundkörper mit einem inneren Rohransatz zum Aufstecken des Schlauchs und einem äußeren Rohrstutzen besteht, welcher in einer Klemmeinrichtung ausläuft, welche aus mehreren über den Stutzenumfang verteilten Stegen mit Nocken und Greifverzahnung besteht, wobei die fingerartig ausgebildete Klemmeinrichtung auf ihrer dem Schlauch in radialer Richtung abgewandten Seite einen ringförmigen Wulst aufweist und eine hohlzylinderförmige Druckschraube/-mutter über den Rohransatz und den Ringraum aufziehbar ist.

Schlauchverschraubungen mit Kupplungen und Wasserstopps sind in der angesprochenen Wassertechnik bekannt und werden in großer Typenvielfalt am Markt angeboten. Weiterhin wurde zwischenzeitlich das Angebot auf Systeme der Wassertechnik erweitert, wobei auch eine gewisse Standardisierung einherging. Entgegen elektrotechnischen Anwendungen - hier spielt die Rücksichtnahme auf spannungsführende Teile mit Berührungssicherheit eine wesentliche Rolle - mit einer isolierten (Wand-) Steckdose als Versorgung und Elektrogeräten mit Steckern basierend auf internationalen, historisch gewachsenen Stecksystemen und Verlängerungsleitungen bestehend aus einseitigem Stecker und gegenseitiger Kupplung, gibt es in der Wassertechnik aus Versorgungssicht einen Wasserhahn - vornehmlich mit einem Außengewinde (entsprechend einem Stecker) - an den entweder ein Schlauch mit einer (Schraub-) Kupplung bei Festanschluß oder ein Hahnstück für die Steckverbindungstechnik angeschlossen werden kann. Im zweiten Fall erfolgt der Übergang auf den Wasserschlauch mittels einer steckbaren Schnellkupplung oder einem ebenso steckbaren Schlauchstück.

Am anderen Ende des Schlauchs befindet sich wieder eine (Schraub-) Kupplung bei Festanschluß oder bei Verwendung des Stecksystems wieder eine Schnellkupplung oder ein Schlauchstück. Entgegen elektrotechnischen Anwendungen weisen die Enden von Verlängerungsleitungen der Wassertechnik analoge Anschlußstücke - wie Kupplungen - auf. Bei der Verbindung zweier wassertechnischer Schlauchleitungen ist zusätzlich entweder ein sogenannter Doppelnippel bei Festanschluß oder eine doppelseitige Steckverbindung bei Einsatz des Stecksystems erforderlich. Gemeinsam haben Elektro- und Wassertechnik, daß die Geräteanschlüsse stets mit Steckern ausgerüstet sind.

Werden jetzt noch die Leitungsquerschnitte berücksichtigt - wie üblicherweise 1/2"-, 3/4"- oder 1"-Abmessung, auch 13 mm, 16 mm oder 19 mm Abmessung - sowie die für die Komponenten der Verbindungstechnik eingesetzten Materialien - wie Kunststoff oder Messing (oder Edelstahl) - ist der Aufbau des wassertechnischen Systems bis auf die Geräteseite - die sich durch alle erdenklichen Applikationen auszeichnet beschrieben.

Nachfolgend wird eine Schlauchverschraubung mit Kupplung und Wasserstopp für die Wassertechnik in häuslicher Umgebung oder Anwendungen im Kleingewerbe und Gewerbe vorgestellt, die sich in vorteilhafter Weise je im Bereich
A) der Schlauchverschraubung
B) der Schnellkupplung und
C) des Wasserstopps
durch Neuerungen auszeichnet - ohne dabei einerseits den Systemgedanken und andererseits die Reduktion der Teilevielfalt zu vernachlässigen - die sich wie folgt darstellen
zu A) bei der Schlauchverschraubung eine neue Schlauchaufnahme und Klemmvorrichtung verbunden mit Unverlierbarkeit der Druckschraube/-mutter zu B) bei der Schnellkupplung eine neue Rast- und Haltetechnik für den aufzunehmenden Stecker
zu C) bei dem Wasserstopp eine neue dem Durchfluß bzw. den Strömungsverhältnissen angepaßte Formgebung - wie Profilierung - des Körpers.

Im folgenden wird zunächst der Stand der Technik von Schlauchverschraubung mit Kupplung und Wasserstopp gewürdigt; gemäß dem Stand der Technik sind, je nach Anwendungsbezug, eine Vielzahl von Typen von Schlauchverschraubungen mit Kupplungen und Wasserstopps im Einsatz.

Die deutsche Offenlegung DE 10 2005 056 826/europäische Patentanmeldung EP 1 788 292 offenbart einen Schlauchanschluß für einen Schlauch, mit einem Rohransatz als Schlauchkupplung, der für ein Aufstecken des Schlauchs vorgesehen ist und an dem eine über den Schlauch stülpbare Außenhülle anbringbar ist, die für die Ausübung einer Betätigungskraft auf zumindest eine zwischen der Außenhülse und dem Rohransatz angeordnete Klemmeinrichtung vorgesehen ist.
Der Schlauchanschluß besteht im wesentlichen aus den Teilen Kupplungsbuchse mit Betätigungsring und doppelhohlzylinderförmigem Rohransatz, ein in axialer Richtung über den Rohransatz (Außengewinde) verfahrbare Außenhülse mit Innengewinde, die einen drehbar gelagerten Grundkörper mit Klemmkrallen mitführt, die den Schlauch über den äußeren Hohlzylinder gegen den inneren Hohlzylinder des Rohransatzes drücken.
Die Anordnung besteht aus vielen Teilen, baut in axialer Richtung lang auf und für die korrekte Handhabung muß für die Rohransatz-Schlaucheinführung die Außenhülse mit Grundkörper entfernt und lagerichtig über den Schlauch gestülpt werden.

Die europäische Patentschrift EP 1 783 414 stellt einen Universal-Schlauchanschluß vor - vorzugsweise für die obererdige Bewässerung - bestehend aus einem Hohlzylinder mit einem Ende zwecks Schlauchaufnahme als Doppelhohlzylinder ausgeführt, wobei der innere Zylinder der Schlauchaufnahme dient und der äußere Hohlzylinder die Sicherungsschraubkappe aufnimmt, die beim Schlauchfestschrauben gegen die am Ende des äußeren Hohlzylinders angeformte Verzahnung und die wiederum gegen den den Schlauch festigenden Rohransatz drückt.

Einen konischen Verlauf des Rohransatzes simulierend, ist der Durchmesser des Rohransatzes in axialer Richtung zur unterschiedlichen Schlauchaufnahme gestuft ausgeführt.

Die internationale Anmeldung WO 2008/067 569 offenbart eine bewegliche Kupplung für eine Gartenbewässerungsanlage. Die Kupplung besteht aus einem Anschlußteil in Form eines Doppelnippels mit einem Innengewinde zum Anschluß der Zuleitung und mit einem Außengewinde an der Übergangsstelle zu einer einen Nippel mit Kugelkopf mit Innenbohrung und Dichtring aufnehmenden Buchse. Die Buchse umfaßt mechanisch etwas mehr als den halben Kugelkopf, so daß eine Verdrehmöglichkeit für die restliche aufgespannte Kugelkopffläche in alle Richtungen verbleibt bis zum Nippelanschlag. Der Doppelnippel hat an der der Zuleitung gegenüberliegenden Seite eine ringförmige Kehle ausgespart, die den Dicht-/O-Ring als Dichtung zum Kugelkopf hin aufnimmt.
Die noch nicht ausgereifte Konstruktion soll eine Verbesserung gegenüber den starren Bögen und Winkeln bisheriger Lösungen darstellen.

Die deutsche Offenlegung DE 10 2004 061 040/europäische Anmeldung EP 1 672 265 offenbart eine Verbindungsanordnung für eine Fluidleitung - insbesondere ein Hahnstück zum Anschluß eines Schlauchs an eine Wasserleitung - derart, daß die Verbindungsanordnung aus einem Zuführungs-Anschlußstück mit Innengewinde, einem horizontal wie vertikal drehbaren, wasserführenden Gelenkmittelstück und einem steckbaren Anschlußstück besteht. Die Verbindungsanordnung kann Teil einer ortsfesten oder quasi ortsfesten Einrichtung oder vorzugsweise ein eigenständiges Verbindungsstück zwischen zwei Fluidleitungen sein.
Ein aufwendig zu dichtendes Verbindungsbauteil aus vielen Komponenten zusammengesetzt.

Die europäische Patentanmeldung EP 1 846 685/amerikanische Anmeldung US 2008/197 625/internationale Anmeldung WO 2006/044 801 stellt eine nach Beanspruchbarkeit und Herstellkosten optimierte einfache Gartenschlauchkupplung in verschiedenen Variationen vor. Die Schlauchkupplung besteht aus einem Stecker- oder Kupplungsteil mit Außen- bzw. Innengewinde. Danach schließt sich durch eine Schulter getrennt ein Schlauchverbinder bestehend aus einer Muffe an, der den Schlauch aufnimmt; im Bereich der Muffe wird der Schlauch mittels einer Hülse verpreßt. Die Hülse kann stecker- bzw. kupplungsseitig mit einer Lippe versehen sein, die haltend in einer Kehle der Muffe ruht. Für größere Haltekräfte kann die Muffenoberfläche gerippt oder mit nutbildenden Ringwülsten versehen oder nur mit einer Wulst als Schikane beaufschlagt sein.
Die Schlauchkupplung ist nicht lösbar und kann nur werksseitig in Zusammenhang mit dem Schlauch gefertigt werden.

Die Offenlegung DE 199 15 291/europäische Anmeldung EP 1 166 003/amerikanisehe Anmeldung US 7 021 669/internationale Anmeldung WO 2006/000 269 stellt eine Fluid-Kupplungsanordnung mit einer relativ zu einem Grundkörper verschiebbaren Hülse eines Kupplungsstücks vor, bei der das versehentliche Lösen der Verbindung dadurch vermieden wird, daß die Hülse um einen begrenzten Drehwinkel gegen den Grundkörper verdrehbar ist und in der gedrehten Lage die Längsverschiebung durch Anschlagmittel verhindert ist. Die Hülse ist vorzugsweise in beiden Endpositionen der Drehbewegung durch Rastmittel lagestabil.

Dem Nutzer muß die Handhabung per Bedienungsanleitung nahegelegt werden; eine Längs- und eine Drehbewegung zum Öffnen oder Schließen sind nicht selbstverständlich.

Die europäische Patentschrift EP 1 001 858/internationale Anmeldung WO 1999/007 494 beschäftigt sich mit einem mit Gewinde versehenen Kupplungsadapter für Gartenschläuche. Vorgestellt wird ein Schlauchverbinder für eine zuverlässige und präzise Kupplung eines Gartenschlauchs mit einem Anschluß mit Innengewinde, z.B. für wasserführende Anlagen, umfassend
- einen ersten Teilabschnitt versehen mit einem Außengewinde für eine Schraubverbindung mit dem Innengewinde des Anlagenanschlusses und
- einem zweiten, im wesentlichen zylindrischen Teilabschnitt zur Schlauchmontage.

Der erste Abschnitt beinhaltet einen kräftigen Ring, der außen mit einem Außengewinde versehen und auf einem zylindrischen Abschnitt eines dünnen Metallrohrs fest montiert ist und in axialer Richtung auf dem Zylinderabschnitt durch einen ersten und einen zweiten Flansch des dünnen Metallrohrs berandet wird

Die Entwicklung stellt einen Systembruch dar, da von der Anlagenseite ein Anschluß mit Innengewinde vorausgesetzt wird; bekannte Wasserinstallationen mit Hähnen weisen stets ein Außengewinde auf. Die Entwicklung beruft sich auf die vorteilhafte Anwendung der Glühlampe mit Edison-Sockel und -Fassung; dort kann nicht anders verfahren werden, da sonst die elektrischen Kontakte der Fassung unisoliert offen liegen; ähnliche Verhältnisse sind bei elektrischen Steckern und Steckdosen/Kupplungen anzutreffen - die spannungsführenden Teile bedürfen der Isolation und Unzugänglichkeit.

Gemäß der Veröffentlichungen europäisches Patent EP 0972155/ amerikanisches Patent US 6 325 425/internationale Anmeldung WO 1998/041 791 wird ein lösbares Schlauchverbindungssystem vornehmlich für die Wassertechnik vorgestellt. Das System besteht aus einem Armaturenanschluß - wie für einen Wasserhahn - ein Universal-Gehäuse mit zuleitungsseitigem Innengewinde für die Armaturenbefestigung, ein Kupplungsstück mit Dicht-/O-Ring und eine Armaturendichtscheibe beinhaltend. Das Gegenstück - ein Schlauchendverbinder - besteht ebenfalls aus dem Universal-Gehäuse, einem Kupplungsstück mit Dicht-/O-Ring, einem Rohransatz für die Schlauchaufnahme, einem über Aufnahme und Schlauch gestülptem Druckring sowie eine auf den Druckring (und damit auf den Schlauch) wirkende, durch das jetzt ableitungsseitige Innengewinde des Gehäuses geführte Druckschraube. Das Universal-Gehäuse besitzt an seinem kupplungsseitigem Ende einen hälftigen Rasthaken- oder BajonettVerschluß, so daß zwei Universal-Gehäuse kupplungsseitig gegeneinander geführt, durch Rastung oder Drehung eine flüssigkeitsdichte lösbare Verbindung ergeben. Es können auch zwei Schlauchendverbinder flüssigkeitsdicht gekoppelt werden.

Die Druckschraube wird schlauchseitig aufgebracht und gegen den Druckring in Richtung Kupplungsstück verschraubt.

Die deutsche Offenlegung DE 195 03 722/europäische Patentschrift EP 0726 418 berichtet über eine Schlauchkupplung mit doppelhohlzylinderförmigem Schlauchanschluß, wobei der innere Rohransatz den Schlauch aufnimmt und der äußere Rohrstutzen an seinem der Kupplung abgewandten Ende über einen Steg mit radial verschieblichen Greifelementen mit Verzahnung verbunden ist und über sein Außengewinde eine axial verschiebliche zweiteilige Schraubhülse aus Schraubstück mit Innengewinde und schlauchführender Innenhülse aufnimmt, wobei die Innenhülse an ihrem der Kupplung zugewandten Ende eine konische Betätigungsfläche aufweist, die auf den Nockenteil der Greifelemente wirkt, die wiederum den Schlauch gegen den inneren Rohransatz pressen.

Zum Zwecke der Schlauchmontage muß der Schlauchanschluß getrennt werden; Schraubstück und Innenhülse müssen lagerichtig über das Schlauchende gestülpt, die Verbindung Schlauch - Rohransatz hergestellt und zweiteilige Schraubhülse mit Rohrstutzen verschraubt werden. Der Schlauchanschluß ist mehrstückig aufgebaut.

Das amerikanische Patent US 5 816 622 stellt einen Leitungsknickschutz für einen Schlauchanschluß für eine wasserführende Anlage vor. Ein bekannter Schlauchanschlußkörper mit Kupplung und Innengewinde zum Anschluß an Armaturen besitzt an der der Kupplung gegenüberliegenden Seite einen inneren Rohransatz zur Schlauchaufnahme mit einer darüber gestülpten Messinghülse zur Befestigung des Schlauchs. Weiterhin ist das Kupplungsgehäuse als äußerer Rohransatz ebenfalls an der der Kupplung gegenüberliegenden Seite zum Schlauch hin in axialer Richtung verlängert und mit zwei sich diametral gegenüberliegenden Öffnungen versehen, in die sich zwei manuell zu betätigende Rasthaken legen, die Bestandteil einer über den Schlauch gezogenen, in axialer Richtung ausgedehnten Schutzhülse aus elastomerem Material sind und die die festigende Verbindung zwischen Schutzhülse und Kupplungsgehäuse herstellen.

Der Leitungsknickschutz kann nur dann seine Wirkung entfalten, wenn die Biegesteifigkeiten der Materialien von Gartenschlauch und Knickschutz abgestimmt sind, da ansonsten nur das Abknicken des Schlauchs vom Ende des Kupplungsgehäuses bzw. Rohransatzes zum Ende des Knickschutzes verschoben wird.

Eine weitere Knickschutzlösung wird in der Anmeldung US 5 181 750 geboten; hier die Biegeelastizität des Schutzes durch tief eingreifende transversale Rippen deutlich.

Die amerikanischen Anmeldungen US 5 316 348, US 5 367 925, CA 2 099 225 und US 5 572 912 stellen ein Werkzeug-Hilfsmittel vor, was bei häufig zu wechselnden Arbeitseinsätzen von Schlauchverbindungen dienlich sein soll. Ausgegangen wird von einem bekannten Schlauchanschlußkörper mit Kupplung und Innengewinde zum Anschluß an bekannte Armaturen, wie z.B. Hähne der Wassertechnik. Gemäß der vorteilhaften Neuerung wird vorgeschlagen, das Äußere des Kupplungsgehäuses als Außen-Sechskant auszuführen. Desweiteren wird vorgeschlagen, quasi einen Rohrschlüssel über den Schlauch zu stülpen, der einen Innen-Sechskant mit einer passenden Schlüsselweite aufweist, die über die Schlüsselweite des Kupplungsgehäuses zu schieben ist. Der in seinem Innern den Schlauch führende Quasi-Rohrschlüssel ist über seine axiale Länge so aufgeweitet, daß seine Handhabbar- und Griffigkeit verbessert ist, was noch durch zusätzliche longitudinale Rillen oder Rippen verstärkt wird.

Der stets mitgeführte Quasi-Rohrschlüssel schränkt die Flexibilität des Wasserschlauchs in der Umgebung der Armatur ein; desweiteren sollen die durch Dicht-/O-Ringe gedichteten Anschlüsse ohnehin nur handfest angezogen werden.

Europäische Patentanmeldung EP 0384 516/amerikanisches Patent US 5 072 971 stellt ein hohlzylinderförmiges Stecker-/Kupplungselement für Schläuche großen Durchmessers vor, wobei das Steckerelement an seiner Außenwand radial über den Umfang verteilt, über sich in axialer Richtung erstreckende Rippen verfügt und die Kupplung entsprechend an diesen Stellen in axialer Richtung Aussparungen zur Rippenaufnahme aufweist, wobei nach dem axialen Stecken eine kurze radiale Drehbewegung zur Verriegelung von Stecker und Kupplung führt.

Ein zusätzlicher mechanischer Hebel verriegelt Stecker und Kupplung miteinander; der Hebel kann auch für die manuelle Bedienung ausgelegt sein.

Die europäische Patentanmeldung EP 0340 518 stellt eine Schnellkupplung vor, die einerseits in der Zuleitung einen Anschluß für einen Nippel eines Wassergeräts vorsieht und andererseits am gegenüberliegenden Ende erstens ein Rohransatz zur Schlauchaufnahme und desweiteren ein Rohrstutzen mit einem auf den Schlauch wirkenden Greifelement, wenn ein Schraubstück in Richtung Kupplung bewegt wird. Im zentralen Durchströmkanal ist eine in Fließrichtung U-förmige Schlauchplatzsicherung - auch Wasserstopp genannt - vorgesehen.

Die Schlauchplatzsicherung ist für eine Strömungsrichtung ausgelegt; an ihrem in Fließrichtung weisenden Ende sitzt das eigentliche Ventil mit Dicht-/O-Ring, die Spitze ist als Karniesbogen ausgeführt.

Eine solche Schnellkupplung mit Schlauchplatzsicherung/Wasserstopp ist auch Gegenstand der englischen Patentanmeldung GB 2 081 409.

Auch in dieser Anmeldung ist die Schlauchplatzsicherung in ihrer Ausführungsform für eine Strömungsrichtung ausgelegt.

Die englische Patentveröffentlichung GB 2 237 343 präsentiert eine Schnellverschraubung als Rohr-/Schlauchverbinder, bei der ein flexibler Schlauch über ein starres Rohr schiebbar ist und über Rohr und Schlauch die Schnellverschraubung angeordnet wird. Die Schnellverschraubung ist 3-teilig gestaltet und besteht aus einem über den Schlauch geschobenen hohlzylinderförmigen Stutzen, der aus drei Abschnitten besteht, einem als Hohlzylinder ausgebildeten Befestigungsstutzen, einem sich anschließenden Außengewindeteil, welches sich im dritten Abschnitt fingerartig öffnet und in einem keilförmigen geschlitzten Ring endet, an dessen äußerer Innenseite ein über eine über das Außengewindeteil geführte Innengewindemutter getriebener Zurring angreift. Ein radiales Verdrehen der Gewindemutter bewirkt eine axiale Lageänderung des Zurrings und diese wiederum die fingerartigen Abschnitte des geschlitzten Rings über den flexiblen Schlauch auf das starre Rohr drückt oder von diesem löst.

Die Schnellverschraubung ist mehrteilig ausgeführt; die Kraftübertragung auf den Schlauch erfolgt von der Gewindemutter, über den Zurring und die fingerartigen Abschnitte des Rings auf Schlauch und Rohr. Die Schlitze des Rings sind in axialer Richtung zu gering ausgeprägt, so daß die fingerartigen Abschnitte zu wenig Federwirkung zeigen. Zudem sind die innen in Zähnen endenden fingerartigen Abschnitte zu spitz ausgeführt und sich zerstörerisch in den flexiblen Schlauch bohren. Die Gewindemutter ist zur Schlauchseite nicht unverlierbar gestaltet. Der Anstellwinkel zwischen Zurring und der konischen inneren Wand des keilförmigen geschlitzten Rings ist zu steil. Bei gelöster Gewindemutter öffnen sich die fingerartigen Abschnitte nur wenig.

Die amerikanische Veröffentlichung US 4 915 351 stellt eine Schlauchkupplung mit einem Ventil vor, welches als scheibenförmiges Membranventil ausgeprägt ist. Der Schlauchanschluß besitzt einen hohlzylinderförmigen Stößel, der im zusammengebauten/-gesteckten Zustand der Kupplung gegen die scheibenförmige, mit Öffnungsschlitzen versehene Membran des Anschlußteils drückt, diese um den Stößel dehnt und deren Schlitze zu durchflußzulassenden Öffnungen aufweitet. Im getrennten Zustand geht die Membran in ihren Schließzustand zurück und wird bei vorliegendem Wasserdruck gegen die Schulter des Anschlußteils gedrückt und dichtet. Bei abgezogenem Schlauchanschluß dichtet die Schlauchkupplung,

Die Offenlegungsschrift DE 44 33 812 präsentiert einen Schlauchanschluß zum Anschluß eines - insbesonderen - Gartenschlauchs an ein Wassergerät, über einen Anschlußnippel über eine drehbar gelagerte Steckkupplung. Der Schlauchanschluß besteht aus Schlauchbefestigung, Schlauchanschlußkörper und Steckkupplung, wobei der Schlauchanschlußkörper zwischen 15° und 75° winklig - vorzugsweise 45° winklig - ausgeführt sein soll und im Zusammenhang mit der drehbar gelagerten Kupplung stets einen verdreh- und knickfreien Schlauchverlauf garantiert.

Zum Anschluß eines Schlauchanschlusses an einen Schlauch wird dieser mit seinem Ende bei gelöster Spannhülse auf den Rohrstutzen aufgeschoben. Durch Anschrauben der Spannhülse auf das Gewinde werden die Greifnocken in den Schlauch und dieser auf den Rohrstutzen gedrückt; der zulässige Klemmbereich beträgt 16 mmD ... 21 mmD, auch unterschiedliche Schläuche nach Art, Steifigkeit und Festigkeit sind anschließbar.

Zum Anschluß der Steckkupplung an einen Anschlußnippel wird dieser ohne Betätigung der Betätigungshülse in den Kupplungsraum eingeschoben - Einhand-Bedienung, Dabei drücken der O-Ring und der Vorsprung den Nockenabschnitt der Rastnocken radial nach außen schwenkend. Die Rastnocken fallen in die Vertiefung hinter dem Vorsprung ein; die Kupplung ist eingerastet. Ein Innendruck, der versucht den Anschlußnippel radial nach außen zu drücken, wird durch eine Verstemmung zwischen dem Vorsprung und der Stützfläche unter Zwischenschaltung des Nockenabschnitts aufgenommen. Es gibt keine weiteren in Umfangsrichtung sperrenden Kräfte, die die leichte Verdrehbarkeit bei vollkommener Dichtung beeinflussen.

Eine Schlauchplatzsicherung ist nicht dargestellt, ist aber im Bereich des Durchströmkanals als ein vom Anschlußnippel betätigtes Ventil einbaubar.

Gemäß der österreichischen Patentschrift AT 397 294 wird eine Schlauchkupplung wird eine dreiteilige Schlauchkupplung vorgestellt, bestehend aus einer endseitig an einen Schlauch anzuordnende Steckmuffe mit einer außenseitig umlaufenden Nut, einer die Steckmuffe aufnehmenden Kupplungsmuffe sowie ein in beide Muffen eingreifendes Riegelglied. Alle Teile sind hohlzylinderförmig ausgeprägt. Die Kupplungsmuffe weist in der Querschnittsebene, in der bei gekuppelter Steckmuffe deren Nut liegt, Schlitze zur Aufnahme des in die Nut der Steckmuffe eingreifenden Riegelglieds auf. Das Riegelglied ist aus mindestens zwei, im Querschnitt annähernd T-förmige Kreisringbögen gebildet, wobei die in radialer Richtung gemessene Höhe des mittleren Stegs des annähernd T-förmigen Querschnitts im Bereich der Schlitze größer ist als die vom Nutengrund der Kupplungsmuffe aus gemessene Wandstärke derselben, und die Kreisringbögen durch mindestens ein an diesem außenseitig anliegendes Ringfederglied zusammengehalten sind.

Die Gestaltung ist durch ein zusätzliches Teil aufwendig; auf jeden Fall muß die Unverlierbarkeit des Riegelglieds sichergestellt sein.

Solche auch als Schnellkupplungen bekannte Schlauchverbinder sind in den amerikanischen Veröffentlichungen US 4 561 682 und US 4 591 192 zu finden.

In der deutschen Patentschrift DD 22 57 56 wird eine Schnellkupplung mit Wasserstopp für Gartenschläuche vorgestellt. Der im Innern der Kupplung befindliche Ventilkörper stoppt den Wasserfluß, wenn das Anschlußgerät gewechselt wird. Eine Demontage dieser Schnellsteckkupplung bei Störungen und ein Auswechseln von Verschleißteilen ist möglich, ohne die Schnellsteckkupplung dabei zu zerstören.

Der druckfederbeaufschlagte Ventilkörper arbeitet wie ein Rückschlagventil.

Die Offenlegung DE 34 26 574/europäische Anmeldung EP 0170 042 stellt eine Kupplung als Verbindung zweier wasserführender Rohre vor, die an ihrer Außenseite ein Gewinde vorweist, an ihrer Innenseite eine Verdrehsicherung und von dieser axial beabstandet eine Anlagefläche, die sich in Richtung auf das freie Ende der Kupplung kegelstumpfförmig erweitert. Die Kupplung arbeitet mit einem Nippel zusammen, der eine Verdrehsicherung, eine Überwurfmutter zur Verbindung mit dem Außengewinde der Kupplung und eine Anlagefläche aufweist.

Der Nippel weist eine zweite mit der Überwurfmutter zusammenwirkende schräge Anlagefläche auf, so daß bei zusammengesetzter Kupplung die Kräfteverteilung günstig aufgenommen wird.

Die Offenlegung DE 31 33 837 zeigt eine Anschlußeinrichtung, die an einer Schlauchkupplung, einer Schlauchverbindung o.ä., angeformt ist, mit einem Kranz von Andrückelementen in Form federnder Nocken, die von einer Überwurfmutter in Richtung auf einen mittleren Rohrstutzen gedrückt werden. Ein aus dichtem Innenschlauch und Gewebe-Außenschlauch bestehender, in drucklosem Zustand zusammenlegbarer Flachschlauch ist auf den Rohrstutzen geschoben und legt sich in eine Nut zwischen zwei Ringwülsten. Zwischen dem Schlauch und dem Kranz von Andrückelementen ist eine zylinderförmige elastomere Hülse geschoben, die mit ihrem über den Rohrstutzen hinausragenden kegelstumpfförmigen Abschnitt einen Abknickschutz für den Schlauch bildet.

Die Überwurfmutter der Anschlußeinrichtung wirkt auf die Federnocken der Andrückelemente, die zwischen dem äußerem Rohrstutzen und der Nut zwischen den Ringwülsten ihren Halt finden, in Richtung des Grundkörpers; entsprechend ist die Schraubrichtung ausgebildet

In der Patentschrift AT 241 212 wird eine lösbare Schraubkupplung vorgestellt mit der Besonderheit, daß das Schlauchende in der Kupplung nicht beschädigt werden kann, was auftritt, wenn der Schlauch zwischen zwei zueinander verdrehbaren konischen Hülsen verklemmt wird, wobei große Reibungskräfte auftreten, die zu Rissen in der Umfangsrichtung des Schlauchs führen. Zur Lösung wird folgende Schlauchkupplung empfohlen. Eine hohlzylindrische Einsteckhülse besitzt geräteseitig ein Außengewinde und einen Sechskant zur Handhabung sowie in axialer Verlängerung schlauchseitig ein Außengewinde und daran anschließend eine konische Verjüngung. Über die Einsteckhülse wird eine Zwischenhülse mit einer axialen Bohrung entsprechend dem Schlauch-Außendurchmesser aufgeschraubt. Im Bereich der axialen Bohrung verfügt die Zwischenhülse wiederum über ein Außengewinde, welches eine Schraubhülse mit Innengewinde aufnimmt und in deren axialer Verlängerung eine lose drehbar gelagerte hohlzylindrische Klemmhülse geführt wird, deren Innendurchmesser ein dem einzuführenden Schlauch ähnelndes Profil aufweist. Wird die Schraubhülse mit der Zwischenhülse verschraubt, wird die lose gelagerte Klemmhülse mit Schlauch über die Verdickung der Einsteckhülse in axialer Richtung mitgeführt und der Schlauch verklemmt sich zwischen Innenprofil Klemmhülse und Außendurchmesser/konischer Verjüngung Einsteckhülse.

Für diese Schlauchkupplung sind Einsteck-, Zwischen-, Schraub- und Klemmhülse notwendig, aufwendig gestaltete, mit Gewinden versehene Präzisionsdrehteile.

Unter den amerikanischen Veröffentlichungen US D475768S und D475769S werden zwei Design Patente vorgestellt, je für eine lösbare Gartenschlauchkupplung mit Außengewinde als Stecker und mit Innengewinde als Kupplung. Alle vorgestellten Veröffentlichungen eignen sich nur bedingt oder gar nicht für den spezifischen Einsatz als Schlauchverschraubung mit Kupplung und Wasserstopp insbesondere nicht als Schlauchverschraubung mit Kupplung und Wasserstopp für die Wassertechnik in häuslicher Umgebung oder Anwendungen im Kleingewerbe oder Gewerbe.

Der Erfindung liegt daher die Aufgabe zu Grunde, eine Schlauchverschraubung mit Kupplung und Wasserstop, insbesondere eine Schlauchverschraubung mit Kupplung und Wasserstopp für die Wassertechnik in häuslicher Umgebung oder Anwendungen im Kleingewerbe oder Gewerbe, zu schaffen.

Diese Aufgabe wird erfindungsgemäß durch die Merkmale des Anspruchs 1 gelöst; auf vorteilhafte Ausgestaltungen nehmen die Unteransprüche Bezug.

Ziel sind Verbesserungen an der Schlauchverschraubung mit Kupplung und Wasserstopp derart, daß
A) bei der Schlauchverschraubung eine neue Schlauchaufnahme und Klemmvorrichtung verbunden mit Unverlierbarkeit/Lagegerechtigkeit der Druckschraube/-mutter
B) bei der Schnellkupplung eine neue Rast- und Haltetechnik für den aufzunehmenden Stecker
C) bei dem Wasserstopp eine neue dem Durchfluß bzw. den Strömungsverhältnissen angepaßte Formgebung - wie Profilierung - des Körpers zur Anwendung kommen.

Die Schlauchverschraubung besteht im wesentlichen aus einer einstückigen Verbindung von Schlauchaufnahme und Kupplung; die Schlauchverschraubung soll die Verbindung eines aus elastomerem Material hergestellten Schlauchs mit einem Kupplungsstück in Form einer lösbaren Kupplung herstellen. Die Schlauchverschraubung ist handelsüblich als Kunststoffteil oder auch als Metallteil - vorzugsweise Messing - mit Kunststoff-Einlegeteilen oder als metallisiertes Kunststoffteil erhältlich.

Zu A) Die Ausgestaltung der erfinderischen Neuheit sieht vor, die Schlauchaufnahme mit Schlauchanschluß so zu gestalten, daß die Nachteile gemäß dem Stand der Technik verbessert werden; dazu wird vorgeschlagen, die Schlauchaufnahme mit dem Schlauchanschluß prinzipiell anders zu gestalten. Ein großer Nachteil bei allen bekannten Verschraubungen dieser Art ist sicherlich, daß - nach dem der Schlauch aufgesteckt wurde - eine Klemmeinrichtung über eine Druckschraube/-mutter meist durch Drehen betätigt wird, die dann über die Klemmeinrichtung auf den Schlauch fest haltend wirkt. Dazu ist es erforderlich, Schlauchaufnahme, Klemmeinrichtung und/oder Druckschraube/-mutter zu trennen, um den Schlauch aufzustecken. Oft müssen auch Klemmeinrichtung und/oder Druckschraube/-mutter vor dem Aufstecken lagerecht über den Schlauch gestülpt werden. Dabei kommen Teile abhanden und/oder werden in falscher Reihenfolge und/oder nicht lagegerecht aufgereiht. Daher wird gemäß einer Ausprägung der Neuheit vorgeschlagen, Schlauchaufnahme, Klemmeinrichtung und Druckschraube/-mutter einstückig unverlier- und unverwechselbar zu gestalten. Dazu besitzt der Schlauchanschluß einen Grundkörper, der einerseits in einen den Schlauch aufnehmenden hohlzylinderförmigen, in axialer Richtung zur Kupplung hin leicht konisch verlaufenden Rohransatz übergeht und andererseits über einen weiter außen liegenden, parallel angeordneten hohlzylinderförmigen Rohrstutzen über einen Steg ein Nockenteil mit einer radial zum Schlauch weisenden Greifverzahnung - die Klemmeinrichtung - aufweist, die im Auslieferungszustand nach radial nach außen geweitet ist und durch den Innenzylinder der hohlzylinderförmigen Druckschraube/-mutter begrenzt wird. Auf der der Kupplung zugewandten axialen Richtung wird die ähnlich einem Filmscharnier aufgehängte Klemmeinrichtung Steg/Nockenteil/Greifverzahnung in Richtung Schlauch radial zugefahren und durch gegenläufiges Bewegen radial geöffnet; aus dem longitudinalen Verfahren der Druckschraube/-mutter wird ein transversales Schließen/Öffnen der Klemmeinrichtung, wobei durch Wahl des Gewindetyps - Rechts- oder Linksgewinde - das Umsetzen Dreh- in Längsbewegung erfolgt und durch die Gewindesteigung der Längshub pro Umdrehung bzw. die Anzahl der Umdrehungen für den Schließ-/Öffnungsvorgang festgelegt wird, was bedeutet, daß bei Wahl einer großen Gewindesteigung nur ein geringer Drehwinkel für das Öffnen oder Schließen erforderlich ist und umgekehrt.

Je nach Applikation baut die Schlauchaufnahme äußerst kurz, die Teilezahl ist minimiert und die Handhabung erfolgt absolut sicher und problemlos. Die Schlauchaufnahme ist auch für die Anwendung von Rohren geeignet. Bei dem Einsatz von glatten Rohren oder Schläuchen mit Außengeweben ist zwecks Erhöhung der Abzugskräfte oder der Herstellung einer Dichtigkeit der Einsatz einer hohlzylinderförmigen Elastomer-Dichtmanschette zwischen Klemmeinrichtung und Leitung möglich. Es können sowohl dünnwandige als auch dickwandige Schläuche von der Klemmeinrichtung fest gehalten werden; die Druckschraube/-mutter drückt so auf die Wulst der rückwärtigen Seite der Greifverzahnung, daß
- bei dünnwandigen Schläuchen zwei Zacken der Verzahnung ein Labyrinth bilden
- bei dickwandigen Schläuchen die Zacken bei weniger Umdrehungen greifen.

Zu B) Eine weitere vorteilhafte Ausgestaltung der Erfindung betrifft den Bereich der Kupplung - insbesondere die Aufnahme und Sicherung des Kupplungsstücks in der Kupplung. Die Kupplung besteht aus einem im wesentlichen hohlzylinderförmigen Körper, dessen Innenraum so gestaltet ist, daß er das ebenfalls im wesentlichen hohlzylinderförmige, mit einem Dicht-/O-Ring versehene Kupplungsstück - wie z.B. ein Hahnstück, ein Einstecknippel, ein Anschlußnippel, eine Doppel- oder Mehrfachkupplung, eine Reduzierkupplung oder eine Gerätekupplung - aufnimmt und dichtet. Die Kupplung ist einstückig mit der Schlauchaufnahme verbunden.

Die gemäß dem Stand der Technik aufgebauten Kupplungen bestehen aus einem hohlzylinderförmigen Grundkörper - der auch der Grundkörper der Schlauchaufnahme ist - einer über den Grundkörper aufgesprengten, ebenfalls hohlzylinderförmigen, in axialer Richtung verschieblichen Betätigungshülse, die mittels einer Feder vorgespannt ist, und mindestens drei Kunststoff-Rastnocken, die ebenfalls federnd gegen die Innenwand der Betätigungshülse vorgespannt sind. Das Kupplungsstück ist im Sinne einer Einhand-Bedienung ohne Verschieben der Betätigungshülse einkuppelbar; jedoch besteht Quetschgefahr beim Verschieben der Betätigungshülse gegen einen Anschlag des Grundkörpers bei der Einhand-Bedienung. Zum Entkuppeln wird die Betätigungshülse entgegen der Federkraft axial in Richtung der Schlauchaufnahme verschoben, wodurch eine Abstützfläche zwischen Rastnocken und Betätigungshülse freigegeben wird und das Nockenteil des in radialer Richtung nach außen verlagerten Rastnockens das Kupplungsstück zur Entnahme freigibt. Nachteilig für die Freigabe des Kupplungsstücks wirkt sich aus, wenn der hohlzylinderförmige, offen liegende Freiraum zwischen Grundkörper und Betätigungshülse durch Erdreich, Sand o.ä. verschmutzt ist, wodurch eine radiale Lageänderung des Rastnockens nicht möglich ist.

Bei der Metallausführung sind an Stelle der Kunststoff-Rastnocken kleine, durch Federn vorgespannte kopfgerundete Stahlstifte vorzufinden, deren Lage sich ebenfalls in radialer Richtung ändert, wenn die Betätigungshülse verschoben wird. Die metallene Betätigungshülse wird mittels eines Langlochs durch eine von außen zugängliche Madenschraube geführt. Die eingeschränkte Funktionsfähigkeit bei Verschmutzung ist auch hier gegeben. Außerdem sollten wegen der Voltaschen Spannungsreihe keine zwei unterschiedlich metallische, elektrisch leitende Materialien zum Einsatz kommen.

Unter Verzicht auf die oben vorgetragenen Nachteile wird zur Sicherung des Kupplungsstücks in der Kupplung als weitere vorteilhafte Ausgestaltung ein ovaler federnder Kunststoff-Sicherungsring besonderer Ausprägung empfohlen. Der Sicherungsring wird in einem Ringspalt zwischen einem Kupplungsvorder- oder -einführungsteil und einem Kupplungsrückteil - begrenzt durch die dahinterliegende Schlauchaufnahme - lagegerecht beweglich positioniert; seine beiden, an der größten Ausdehnung des ovalen Rings angebrachten, diametral gegenüberliegenden Drucktasten werden je in Griffmulden der Kupplungsoberfläche beweglich eingepaßt. Der ovale Sicherungsring - Formteil - weist im Bereich seiner geringsten Ausdehnung diametral gegenüberliegend je eine V- oder keilförmige Querschnittsform auf, wobei die Spitze des Keils in Richtung des Vorder-/Einführungsteils weist. Im diesem Bereich besteht der V-/keilförmige Querschnitt durch Hinterschnitt im wesentlichen aus den Schenkeln des Keils, um auch hier eine zusätzliche Federwirkung zu erzielen.

Auf Grund dieser Ausprägung des Sicherungsrings ergeben sich für die Kupplungsstück/Kupplung-Steckhandlung folgende Betriebszustände.
a) Im Ruhe-Zustand liegt der Sicherungsring oval entspannt in dem Ringspalt zwischen dem Kupplungsvorder- oder -einführungsteil und dem Kupplungsrückteil; die Drucktasten ragen über die Griffmulden der Kupplung hinaus
b) Wird das Kupplungsstück eingeschoben, erfolgt eine erste Berührung des Kupplungsstücks mit den Spitzen der V-/keilförmigen Querschnitte des Sicherungsrings, die inneren Schenkel des V-/keilförmigen Sicherungsrings federn zurück, der Sicherungsring wird zunächst auf zwei Seiten radial nach außen gedrückt, der ovale Sicherungsring formt sich federnd zu einem Kreisrund
c) Ist das Kupplungsstück in Gänze eingeschoben, fällt der V-/keilförmige Querschnitt des Sicherungsrings auf Grund seiner Vorspannung in eine Vertiefung hinter einem Vorsprung des Kupplungsstücks ein, wobei sich beide Schenkel des V-/keilförmigen Querschnitts auf beiden Seiten des Rings rastend in die Vertiefung legen, der Sicherungsring nimmt wieder eine ovale Form an
d) Durch beidseitiges Drücken der aus den Kupplungs-Griffmulden herausragenden Drucktasten des Sicherungsrings wird der ovale Ring zu einem runden, der V-/keilförmige Querschnitt des Rings bewegt sich je beidseitig aus der Vertiefung des Kupplungsstücks radial nach außen, das Kupplungsstück wird so entriegelt und kann aus der Kupplung gezogen werden.
Fertigungstechnisch ist entweder
- die Kupplung - wie oben dargestellt - zweiteilig aufgebaut und die beiden Kupplungsteile werden nach Einfügen des ovalen Sicherungsrings miteinander verklebt, verschweißt oder verprellt oder
- die Kupplung ist einstückig aufgebaut, enthält einen Ringspalt zur Aufnahme des ovalen Sicherungsrings, wobei dieser vielleicht zwei- oder mehrstückig gestaltet ist und eine der beiden Drucktasten nach dem Einfügen des Rings in das Kupplungsgehäuse nachgerüstet wird.

Zu C) Die weitere vorteilhafte Ausgestaltung der Erfindung widmet sich mit der Betrachtung des Wasserstopps dem Innern der Schlauchverschraubung. Der Wasserstopp - auch als Aquastopp bezeichnet - ist in dieser Applikation nicht zu verwechseln und auch nicht gleichzusetzen mit einer Schlauchplatzsicherung, wo Schläuche dauerhaft an eine feste Wasserinstallation angeschlossen sind - wie typischerweise bei Spül- und Waschmaschinen - wo ein starker Druckabfall unter einen (einstellbaren) Schwellwert, wie z.B. beim Platzen oder Abreißen eines Zuführungsschlauchs vom Wasserhahn, erkannt wird; jedoch kleinere Schlauchdefekte, aus denen - oft auch über einen längeren Zeitraum - Wasser austritt, nicht. Jedoch sind inzwischen auch solche mit Elektronik, Mikroprozessor- und Sensortechnik, ausgestattete Systeme am Markt verfügbar.

Bei dem hier vorgestellten Wasserstopp handelt es sich auch nicht um ein federbeaufschlagtes Rückschlagventil, welches einen Durchfluß oder eine Strömung nur in einer Richtung zulassen soll, d.h. der Druck einer gewünschten Strömung muß die gegen eine Verschlußklappe mit Dicht-/O-Ring eingestellte Federkraft überwinden und der Durchfluß ist bei offener Verschlußklappe gegeben. Fällt der Druck unter den der Federkraft, drückt diese die Verschlußklappe mit Dicht-/O-Ring dicht gegen einen Anschlag. Der Druck einer einsetzenden rückwärtigen Strömung würde sich zu dem Federdruck auf die Verschlußklappe noch addieren und diese Gegenströmung verhindern.

Der hier vorgestellte Wasserstopp liegt wie ein 'Schiffchen' lose im Durchströmkanal der Schlauchverschraubung, hat eine über Dicht-/O-Ring ermöglichte Dichtfunktion und bildet ein von dem hohlzylinderförmigen, mit einem Dicht-/O-Ring versehenen Kupplungsstück - wie z.B. ein Hahnstück, ein Einstecknippel, ein Anschlußnippel, eine Doppel- oder Mehrfachkupplung, eine Reduzierkupplung oder eine Gerätekupplung - betätigtes Ventil, um beim Abziehen des Kupplungsstücks einen ungehinderten Wasseraustritt zu vermeiden

Am derzeitigen Markt werden Schnellkupplungs-Pakete - bestehend aus einem Kupplungsstück, einer Schlauchverschraubung ohne Wasserstopp und einer Schlauchverschraubung mit Wasserstopp - angeboten (ohne Bedienungsanleitung). Das setzt beim Anwender die Kenntnis voraus, daß eine zu schaffende Schlauchverbindung in der Reihenfolge Wasserhahn - Kupplungsstück - Schlauchverschraubung ohne Wasserstopp - Schlauchverschraubung mit Wasserstopp zu erfolgen hat; nur dann entfaltet der Wasserstopp seine Wirkung je nach gestecktem oder ungestecktem Kupplungsstück am Ende der Schlauchverbindung. Wird die so geschaffene Schlauchverbindung vom Wasserhahn-Kupplungsstück getrennt und endenvertauscht angeschlossen, entfaltet der Wasserstopp überhaupt keine Wirkung, Insofern ist das Angebotspaket als nachteilig einzustufen.

Gemäß eines weiteren Angebots eines Schnellkupplungs-Pakets mit Messing oder Messing-Imitationen von Schlauchverschraubungen - bestehend aus einem Kupplungsstück, einer Schlauchverschraubung ohne Wasserstopp und einer Schlauchverschraubung mit Wasserstopp (ohne Bedienungsanleitung) - fließt durch die Schlauchverbindung beim Falsch-Anschluß der Schlauchverschraubung mit Wasserstopp an das Kupplungs-/Hahnstück überhaupt kein Wasser; durch den 'Falsch'-Anschluß blockiert der Wasserstopp die Wasserzufuhr in den Schlauch vollkommen. Für den Anwender ist der Zustand zunächst nicht erklärlich, das Angebotspaket ist als nachteilig einzustufen.

Eine anwenderfreundliche Lösung wäre, nur Schlauchverschraubungen mit Wasserstopp anzubieten, so daß weder bei der Montage noch bei der späteren Anwendung Rücksicht auf die Schlauchverbindung hinsichtlich des Wasserstopps genommen werden muß. Dies ist mit den Schlauchverschraubungen nach EP 0340 518 oder DE 80 32 468 nicht möglich. In beiden Fällen zeigt der Wasserstopp ein Strömungsprofil nur in einer Richtung; in beiden Fällen ist die Schlauchverschraubung je nur für die Anwendung an dem dem Wasserhahn abgewandten Schlauchende geeignet. Je ist die der einen Strömungsrichtung abgewandten Seite des Wasserstopps absolut 'stumpf' und eher durchflußhemmend oder -verhindernd ausgebildet, so daß sich eine Montage oder Benutzung an dem wasserversorgungsseitigen Schlauchende ausschließt.

In einer weiteren Applikation ist der Wasserstopp ebenfalls für einen Betrieb in einer Strömungsrichtung ausgelegt (es wird auch nur eine Schlauchverschraubung mit Wasserstopp im Paket geliefert), jedoch ist hier bei richtiger Montage des Wasserstopps an der dem Wasserhahn abgewandten Seite des Schlauchendes (bei der Montage auf der dem Hahn zugewandten Seite des Schlauchendes entfacht der Wasserstopp überhaupt keine Wirkung) der Wasserstopp strömungstechnisch 'stumpf', durchflußhemmend und/oder -verhindernd ausgebildet, was außerdem -je nach Anwendung und Wasserdruck - aus Kenntnis der Ventiltechnik zu erheblicher Geräuschbildung beisteuert. Bei diesem Wasserstopp befindet sich das Strömungsprofil auf der der Strömung abgewandten Seite.

Diese nicht unerheblichen Nachteile ausschließend, wird in einer weiteren vorteilhaften Ausgestaltung der Erfindung vorgeschlagen, beide Seiten des Wasserstopps strömungstechnisch zu profilieren und die Schlauchverschraubungen stets mit Wasserstopp auszuliefern
- eine Fehlmontage der Schlauchverschraubung mit/ohne Wasserstopp ist ausgeschlossen
- die Schlauchverbindungen weisen gleiche Enden mit Wasserstopp aus
- die Anwendung der Schlauchverbindung ist versorgungs- und geräteseitig gleich
- die Geräuschbildung in Abhängigkeit vom Wasserdruck ist ausgeschlossen.

Ausgehend von dieser vorteilhaften Ausgestaltung einer Schlauchverbindung mit beidseitiger Schlauchverschraubung mit Wasserstopp ergeben sich folgende Betriebszustände
A) bei versorgungsseitigem Anschluß der Schlauchverschraubung
   a) Kupplungsstück ungesteckt
      Wasserstopp im Strömungskanal frei beweglich
   b) Kupplungsstück gesteckt, Gerätekupplung ungesteckt
      Wasserstopp in Strömungsrichtung geöffnet, kein Wasserfluß
   c) Kupplungsstück gesteckt, Gerätekupplung gesteckt, Wasserfluß
B) bei geräteseitigern Anschluß der Schlauchverschraubung
   a) Kupplungsstück ungesteckt, Schlauch drucklos
      Wasserstopp im Strömungskanal frei beweglich
   b) Kupplungsstück ungesteckt, Schlauch druckbehaftet
      Wasserstopp hat geschlossen, kein Wasserfluß
   c) Kupplungsstück gesteckt, Schlauch druckbehaftet
      Wasserstopp in Strömungsrichtung geöffnet, Wasserfluß.

Der Gegenstand der Erfindung wird nachfolgend anhand der als Anlage beigefügten Zeichnungen von Ausführungsbeispielen weiter verdeutlicht. Es zeigen
- **Fig. 1**: Schlauchverschraubung mit halbseitigem Längsschnitt
- **Fig. 2**: Schlauchverschraubung
**a)** Verschraubung mit dünnem Schlauch
**b)** Verschraubung mit dickem Schlauch
- **Fig. 3**: Sicherungsring der Schlauchverschraubung, Betriebszustand
**a)** Kupplung in offenem Zustand; Sicherungsring, oval entspannt
**b)** Kupplungsstück, eingeschoben; Sicherungsring, rund eingefedert
**c)** Kupplungsstück, gesteckt; Sicherungsring, oval angelegt
**d)** Sicherungsring-Drucktasten, gedrückt; Ring, rund gespannt; Kupplungsstück, entnehmbar
- **Fig. 4**: Kupplung mit Sicherungsring, Montage
- **Fig. 5**: Sicherungsring, detailliert
- **Fig. 6**: Schlauchverbindung, versorgungsseitig, Betriebszustand
**a)** Kupplungsstück, ungesteckt
**b)** Kupplungsstück, gesteckt; Gerätekupplung, ungesteckt
**c)** Kupplungsstück, gesteckt; Gerätekupplung, gesteckt
- **Fig. 7**: Schlauchverbindung, geräteseitig, Betriebszustand
**a)** Kupplungsstück, ungesteckt; Schlauch, drucklos
**b)** Kupplungsstück, ungesteckt; Schlauch, druckbehaftet
**c)** Kupplungsstück, gesteckt; Schlauch, druckbehaftet; Wasserstopp, geöffnet
- **Fig. 8**: Ventil, kupplungsgesteuert
**a)** Wasserstopp, in perspektivischer Darstellung, von oben, von unten
**b)** Wasserstopp, Seitenansicht, gedreht
**c)** Wasserstopp, Strömungsprofil, schlauch-/kupplungsseitig
**d)** Wasserstopp, Draufsicht

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterung der Figuren.

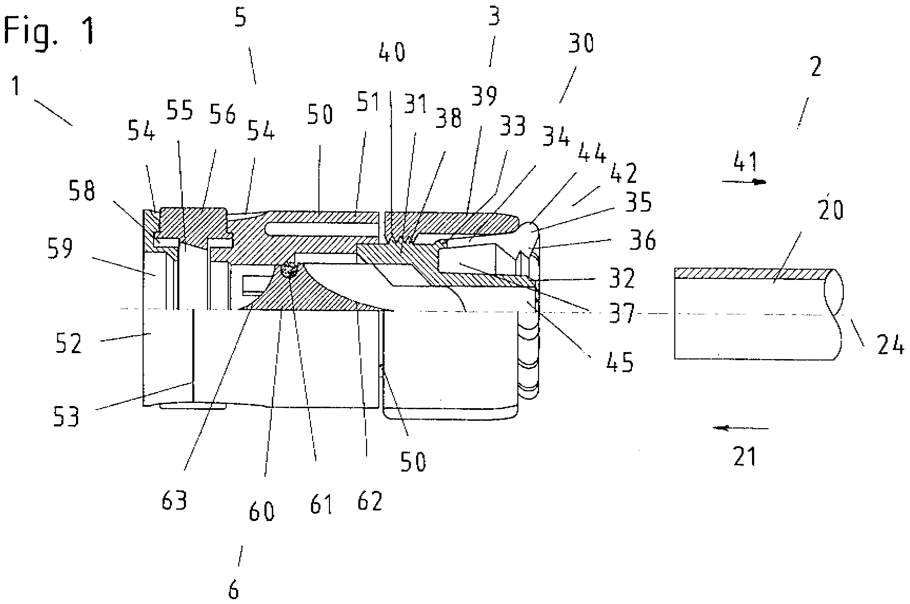

In **Fig. 1** ist die Schlauchverschraubung **1** mit halbseitigem Längsschnitt dargestellt. Es wurde vorgeschlagen, Schlauchaufnahme **3**, Klemmeinrichtung **42** und Druckschraube/-mutter **39** einstückig unverlier- und unverwechselbar zu gestalten; ein nicht lagegerechtes Aufziehen der Druckschraube/-mutter entfällt. Dazu besitzt der Schlauchanschluß **30** einen Grundkörper **31** , der einerseits in einen den Schlauch **2** aufnehmenden hohlzylinderförmigen, in axialer Richtung **21** zur Kupplung hin leicht konisch verlaufenden Rohransatz **32** übergeht, der einen Ringraum **37** zum Schlauchanschluß freigibt, und andererseits über einen weiter außen liegenden, parallel angeordneten hohlzylinderförmigen Rohrstutzen **33** über einen Steg **34** ein Nockenteil **35** mit einer radial zum Schlauch **20** weisenden Greifverzahnung **36** - die Klemmeinrichtung **42** - aufweist, die im Auslieferungszustand nach radial nach außen geweitet ist und durch den Innenzylinder der hohlzylinderförmigen Druckschraube/-mutter **39** begrenzt wird. Auf der der Kupplung **5** zugewandter Seite verfügt die Druckschraube/-mutter **39** über ein Innengewinde **40** , nach Durchmesser und Steigung passend zum Außengewinde **38** des Grundkörpers **31 31** an dieser Stelle. Durch Bewegen der Druckschraube/-mutter **39** in die der Kupplung **5** abgewandten axialen Richtung **41** wird die ähnlich einem Filmscharnier aufgehängte Klemmeinrichtung **42** Steg **34** /Nockenteil **35** /Greifverzahnung **36** in Richtung Schlauch **20** radial zugefahren und durch gegenläufiges Bewegen radial geöffnet; aus dem longitudinalen Verfahren der Druckschraube/-mutter **39** wird ein transversales Schließen/Öffnen der Klemmeinrichtung **42**, wobei durch Wahl des Gewindetyps **38**, **40** - Rechts- oder Linksgewinde - das Umsetzen Dreh- in Längsbewegung erfolgt und durch die Gewindesteigung der Längshub pro Umdrehung bzw. die Anzahl der Umdrehungen für den Schließ-/Öffnungsvorgang festgelegt wird, was bedeutet, daß bei Wahl einer großen Gewindesteigung nur ein geringer Drehwinkel für das Öffnen oder Schließen erforderlich ist und umgekehrt. Die Schlauchaufnahme ist auch für die Anwendung von Rohren geeignet; bei dem Einsatz von glatten Rohren oder Schläuchen mit Außengeweben ist zwecks Erhöhung der Abzugskräfte oder der Herstellung einer Dichtigkeit der Einsatz einer hohlzylinderförmigen Elastomer-Dicht-manschette **43** zwischen Klemmeinrichtung und Leitung möglich

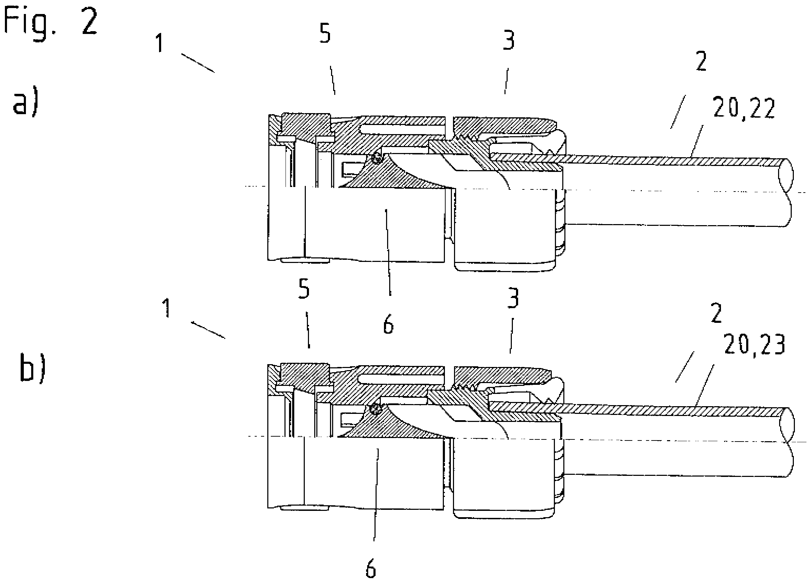

**Fig. 2** zeigt eine vorteilhafte Neuheit dieser Schlauchverschraubung **1** daß - wie in **Fig. 2 a)** gezeigt - die Verschraubung einen sehr dünnwandigen Schlauch **20**, **22** und - wie in **Fig. 2 b)** gezeigt - die Verschraubung auch einen sehr dickwandigen Schlauch **20**, **23** aufnehmen kann; die Druckschraube/-mutter drückt so auf die Wulst **44** der rückwärtigen Seite der Greifverzahnung, daß
- bei dünnwandigen Schläuchen **22** zwei Zacken der Greifverzahnung **36** ein Labyrinth bilden
- bei dickwandigen Schläuchen **23** die Zacken **36** bei weniger Umdrehungen greifen.

Die Voraussetzung einer ausreichenden Festhaltung des Schlauchs **2**, **20**, **22**, **23** mit der vorgeschlagenen Einrichtung ist gegeben und durch Messung von Abzugskräften nachgewiesen.

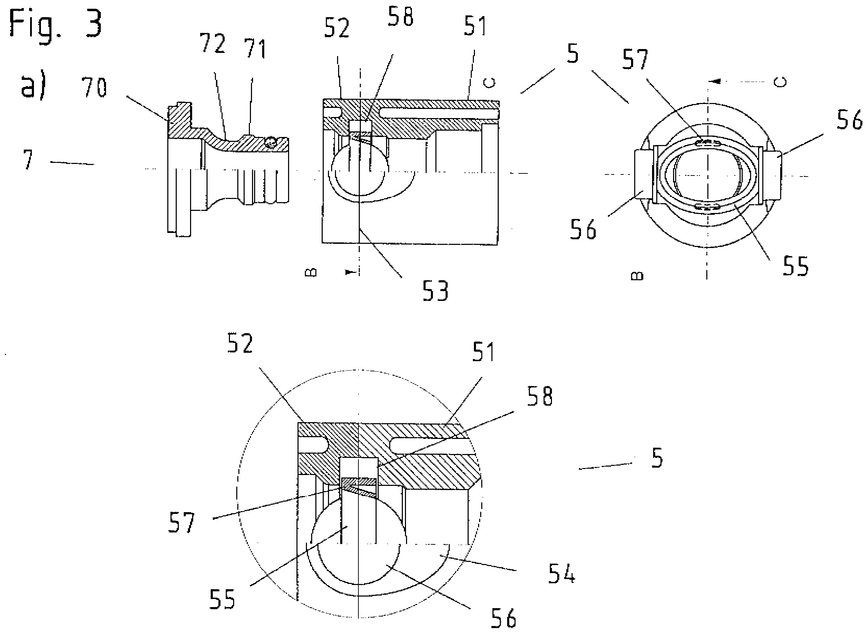

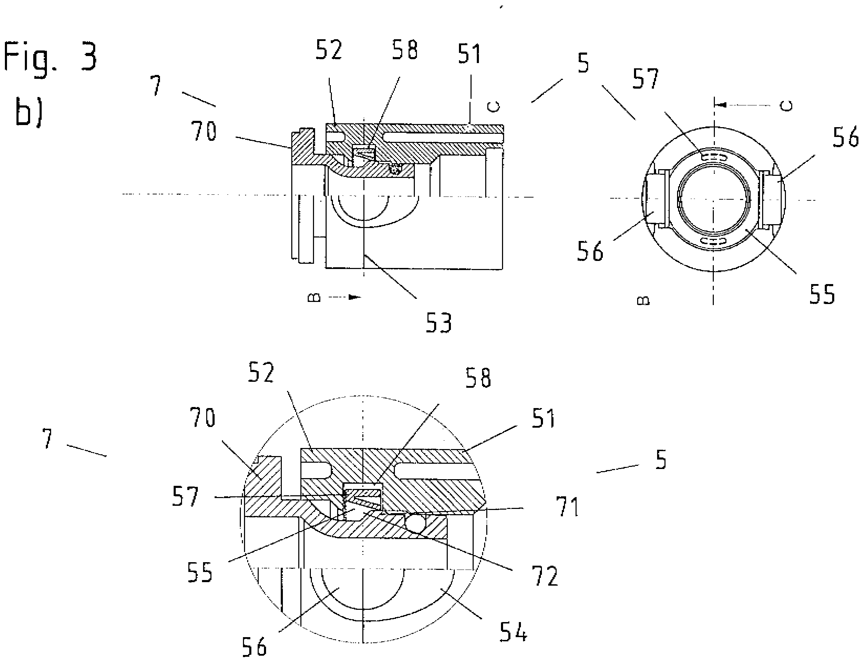

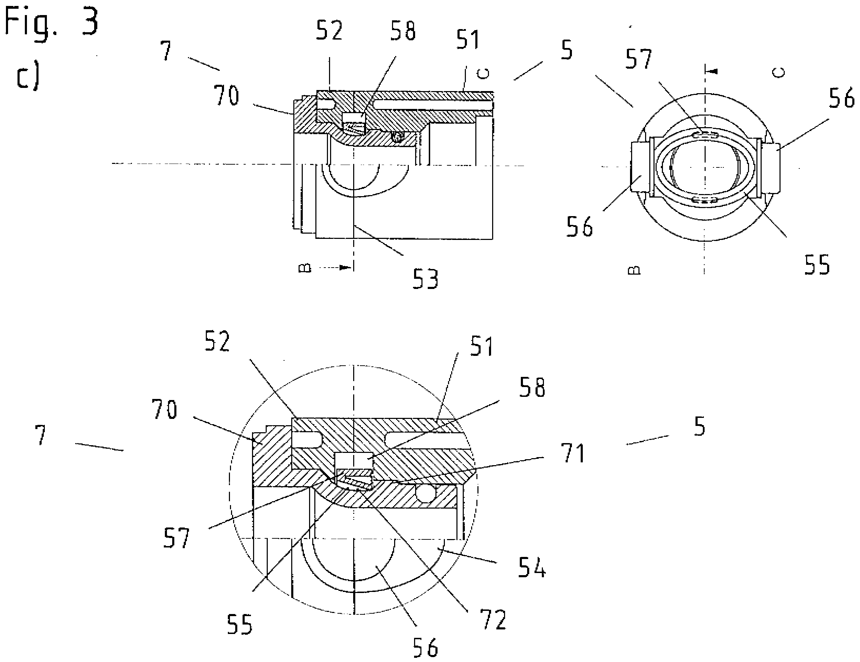

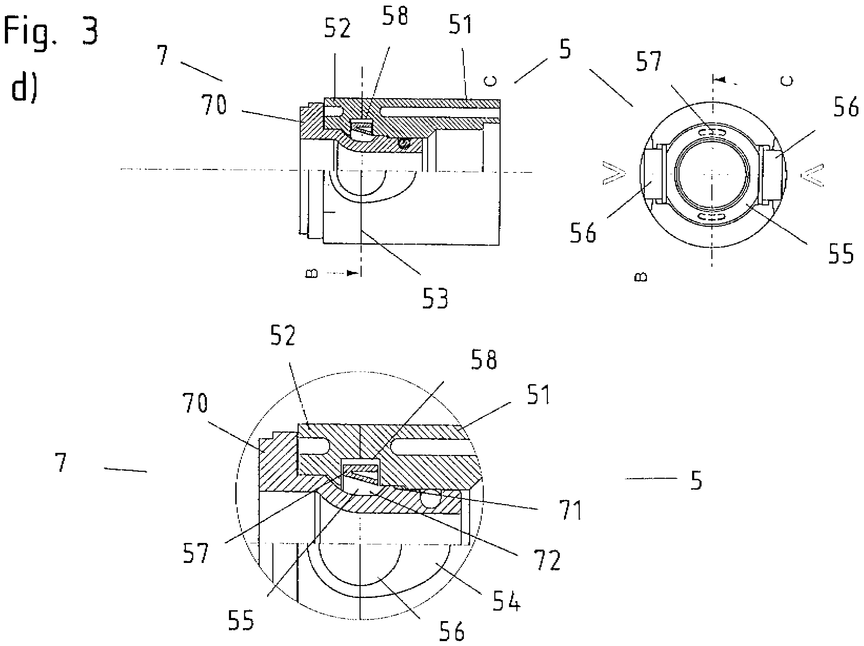

**Fig. 3** zeigt die verschiedenen Betriebszustände des Sicherungsrings **55** der Kupplung **5** der Schlauchverschraubung **1** . Für die Sicherung des Kupplungsstücks **7** , **70** in der Kupplung **6** wird ein ovaler federnder Kunststoff-Sicherungsring **55** besonderer Ausprägung empfohlen. Der Sicherungsring wird in einem Ringspalt **58** zwischen einem Kupplungsvorder- oder -einführungsteil **52** und einem Kupplungsrückteil **51** - begrenzt durch die dahinterliegende Schlauchaufnahme **3** - lagegerecht beweglich positioniert; seine beiden, an der größten Ausdehnung des ovalen Rings **55** angebrachten, diametral gegenüberliegenden Drucktasten **56** werden je in Griffmulden **54** der Kupplungsoberfläche **50** beweglich eingepaßt. Der ovale Sicherungsring - Formteil - weist im Bereich seiner geringsten Ausdehnung diametral gegenüberliegend je eine V- oder keilförmige Querschnittsform **57** auf, wobei die Spitze des Keils in Richtung des Vorder-/Einführungsteils **52**, **59** weist. Im diesem Bereich besteht der V-/keilförmige Querschnitt **57** durch Hinterschnitt im wesentlichen aus den Schenkeln des Keils, um auch hier eine zusätzliche Federwirkung zu erzielen.

Auf Grund dieser Ausprägung des Sicherungsrings **55** ergeben sich für die Kupplungsstück/Kupplung-Steckhandlung folgende Betriebszustände.

**Fig. 3 a)** stellt die Kupplung **5** in offenem Zustand dar, je in Seitenansicht und als Schnitt B sowie die Lage der V-/keilförmigen Verriegelung **57** in der Kupplung **5** als Einzelheit vergrößert. Im Ruhe-Zustand liegt der Sicherungsring **55** oval entspannt in dem Ringspalt **58** zwischen dem Kupplungsvorder- oder -einführungsteil **62** und dem Kupplungsrückteil **51** ; die Drucktasten **56** ragen je über die Griffmulden **54** des Kupplungskörpers **50** hinaus. Das Kupplungsstück **70** befindet sich außerhalb der Kupplung **5** . Die Lage des oval entspannten Sicherungsrings **55** im Ringspalt **58** ist der Einzelheit deutlich entnehmbar.

**Fig. 3 b)** zeigt in Seitenansicht, Schnitt und Einzelheit das Kupplungsstück **7 , 70** eingeschoben; es erfolgt eine erste Berührung des Vorsprungs **71** des Kupplungsstücks **7**, **70** mit den Spitzen der V-/keilförmigen Querschnitte **67** des Sicherungsrings **55**, die inneren Schenkel des V-/keilförmigen Sicherungsrings federn zurück, der ovale Sicherungsring wird zunächst auf zwei Seiten radial nach außen gedrückt, Ringspalt **58** verkleinert sich an der Stelle und der Sicherungsring **55** formt sich federnd zu einem Kreisrund.

**Fig. 3 c)** zeigt in Seitenansicht, Schnitt und Einzelheit das Kupplungsstück **7**, **70** In ganzer Länge in die Kupplung **5** eingesteckt. Der Sicherungsring **55** ist oval angelegt; der V-/keilförmige Querschnitt **57** des Sicherungsrings fällt auf Grund seiner Vorspannung in eine Vertiefung **72** hinter einem Vorsprung **71** des Kupplungsstücks **70** ein, wobei sich beide Schenkel des V-/keilförmigen Querschnitts **57** auf beiden Seiten des Rings **55** rastend in die Vertiefung **72** legen, der Sicherungsring **55** nimmt wieder eine ovale Form an - deutlich an der Größe des Ringspalts **58** auszumachen.

Gemäß **Fig. 3 d)** sind die Sicherungsring-Drucktasten **56** gedrückt - die Doppelpfeile und die Lage der Drucktasten **56** im Kupplungskörper **50** sollen dies andeuten. Durch beidseitiges Drücken der aus den Kupplungs-Griffmulden **54** herausragenden Drucktasten **56** des Sicherungsrings **55** wird der ovale Ring zu einem runden, der V-/keilförmige Querschnitt des Rings **55** bewegt sich je beidseitig aus der Vertiefung **72** des Kupplungsstücks **70** radial nach außen; das Kupplungsstück **70** wird so entriegelt und kann aus der Kupplung **5** gezogen werden.

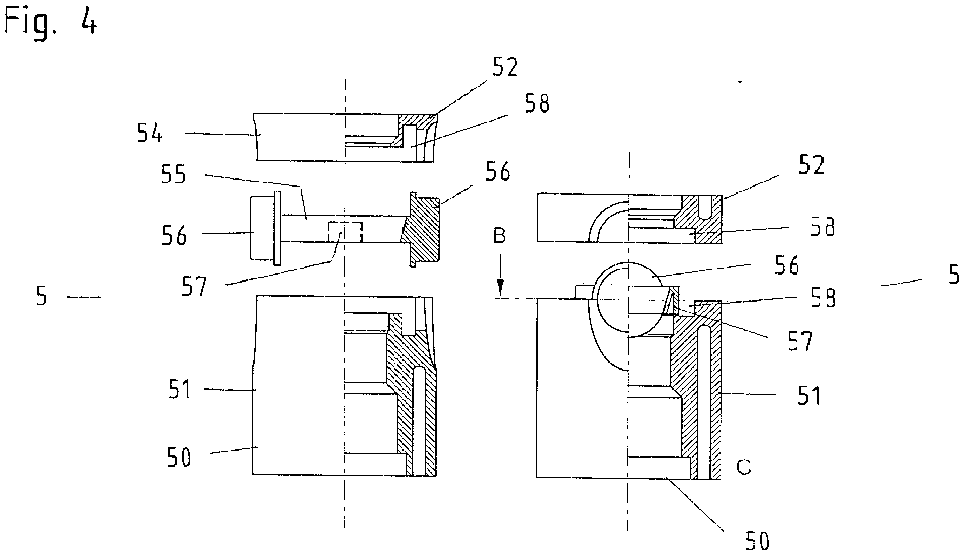

**Fig. 4** beschäftigt sich mit der Montage der Kupplung **5** mit Sicherungsring **55** Fertigungstechnisch ist entweder
- die Kupplung **5** - wie oben dargestellt - zweiteilig aufgebaut und die beiden Kupplungsteile **51**, **52** werden nach Einfügen des ovalen Sicherungsrings **55** miteinander verklebt, verschweißt oder verprellt oder
- die Kupplung **5** ist einstückig aufgebaut, enthält einen Ringspalt **58** zur Aufnahme des ovalen Sicherungsrings **55**, wobei dieser vielleicht zwei- oder mehrstückig gestaltet ist und eine der beiden Drucktasten **56** nach dem Einfügen des Rings in das Kupplungsgehäuse **50** durch mechanisches Befestigen nachgerüstet wird.

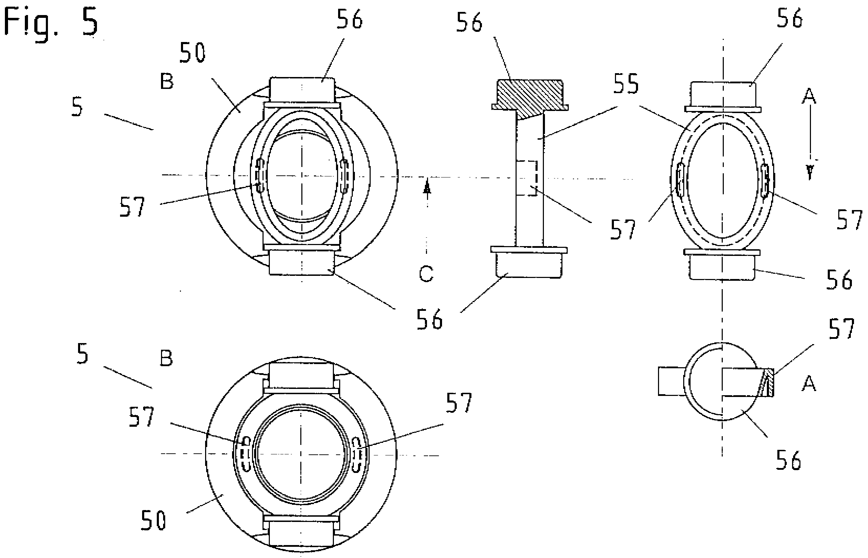

**Fig. 5** zeigt eine Detaillierung des Sicherungsrings **55**; einmal im Ruhe-Zustand, oval ausgeprägt vor dem Hintergrund des Kupplungs-Grundkörpers 2 **50** und einmal zu einem Rund geformt durch gleichzeitigen Druck auf die beiden Drucktasten **56** Weiterhin ist der ovale Sicherungsring **55** in Vorderansicht, Seitenansicht und Draufsicht dargestellt; die Ausbildung des V-/keilförmigen Querschnitts **57** als zusätzliches Rastelement in Verbindung mit Kupplung **5** und Kupplungsstück **7** ist deutlich.

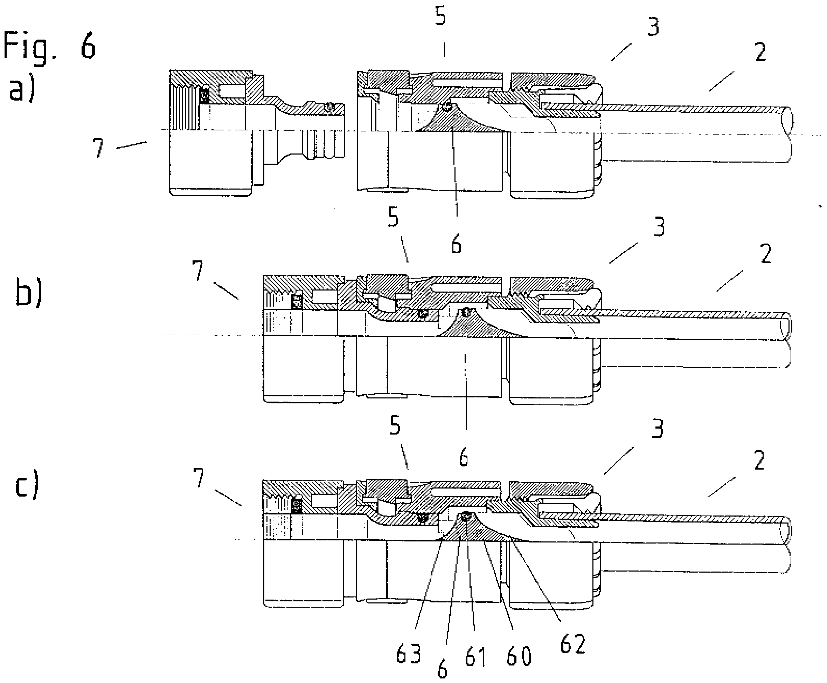

**Fig. 6** beschäftigt sich mit der Schlauchverbindung und im besonderen mit dem versorgungsseitigen Anschluß über das Kupplungsstück **7** sowie die Kupplung **5** der Schlauchverschraubung **1** und zeigt die Betriebszustände der Schlauchverschraubung mit einem kupplungsgesteuertem Ventil **6** auf - insbesondere einem Wasserstopp **61** mit einem beidseitigem Strömungsprofil **62 , 63** .

Der hier vorgestellte Wasserstopp **60** liegt wie ein 'Schiffchen' lose im Durchströmkanal **45** der Schlauchverschraubung **1**, hat eine mittels einem Dicht-/O-Ring **61** ermöglichte Dichtfunktion und bildet ein von dem hohlzylinderförmigen, mit einem Dicht-/O-Ring versehenen Kupplungsstück **7** - wie z.B. ein Hahnstück, ein Einstecknippel, ein Anschlußnippel, eine Doppel- oder Mehrfachkupplung, eine Reduzierkupplung oder eine Gerätekupplung - betätigtes Ventil **6**, um beim Abziehen des Kupplungsstücks **7** einen ungehinderten Wasseraustritt zu vermeiden.

**Fig. 6 a)** zeigt die Schlauchverschraubung **1** bei ungestecktem Kupplungsstück **7** . Der Wasserschlauch **2** ist drucklos, der Wasserstopp **60** liegt frei beweglich im Durchströmkanal **45**.

Wird das Kupplungsstück **7** gemäß **Fig. 6 b)** gesteckt, bringt das Kupplungsstück den Wasserstopp **60** in eine definierte 'Offen'-Stellung, die am gegenüberliegenden geräteseitigen Schlauchende befindliche Gerätekupplung **7** bleibt aber ungesteckt, dann ist zwar der Wasserstopp versorgungsseitig in Strömungsrichtung geöffnet, es findet aber kein Wasserfluß statt, da der Wasserdruck den geräteseitigen Wasserstopp **60** geschlossen hält.

**Fig. 6 c)** soll zeigen, daß der Wasserfluß stattfindet, wenn sowohl das versorgungsseitige als auch das geräteseitige Kupplungsstück **7** gesteckt ist; der Wasserstopp **60** ist dann je in 'Offen'-Stellung.

Die in den Bildern angedeuteten Pfeile sollen einseitig einen Wasserdruck bedeuten und bei zweiseitiger Anordnung einen Durchfluß darstellen.

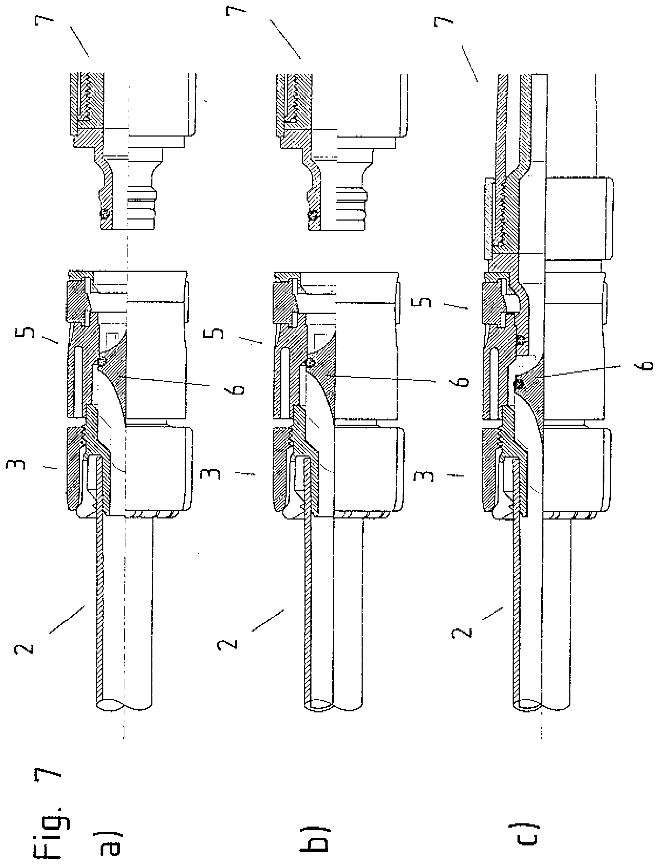

**Fig. 7** beschäftigt sich mit dem geräteseitigen Anschluß der Schlauchverbindung über die Schlauchverschraubung **1** mit Kupplungsstück **7** und erklärt die Betriebszustände dieser Anordnung, auch im Hinblick auf den versorgungsseitigen Anschluß.

Ist gemäß **Fig. 7 a)** der Wasserschlauch **2** drucklos und das Kupplungsstück **7** ungesteckt, dann ist der Wasserstopp **60** im Durchströmkanal **45** frei beweglich.

Wird dagegen der Wasserschlauch **2** druckbehaftet und das Kupplungsstück **7** bleibt geräteseitig ungesteckt, wird gemäß **Fig. 7 b)** der Wasserstopp **60** über den Wasserdruck geschlossen; eine Wasserfluß findet nicht statt.

**Fig. 7 c)** beschreibt den Betriebszustand, wenn der Wasserschlauch **2** druckbehaftet ist und das Kupplungsstück **7** geräteseitig gesteckt ist, wodurch der Wasserstopp **60** in 'Offen'-Stellung geht, was zum Wasserfluß führt.

Die in den Bildern angedeuteten Pfeile sollen einseitig einen Wasserdruck bedeuten und bei zweiseitiger Anordnung einen Durchfluß darstellen.

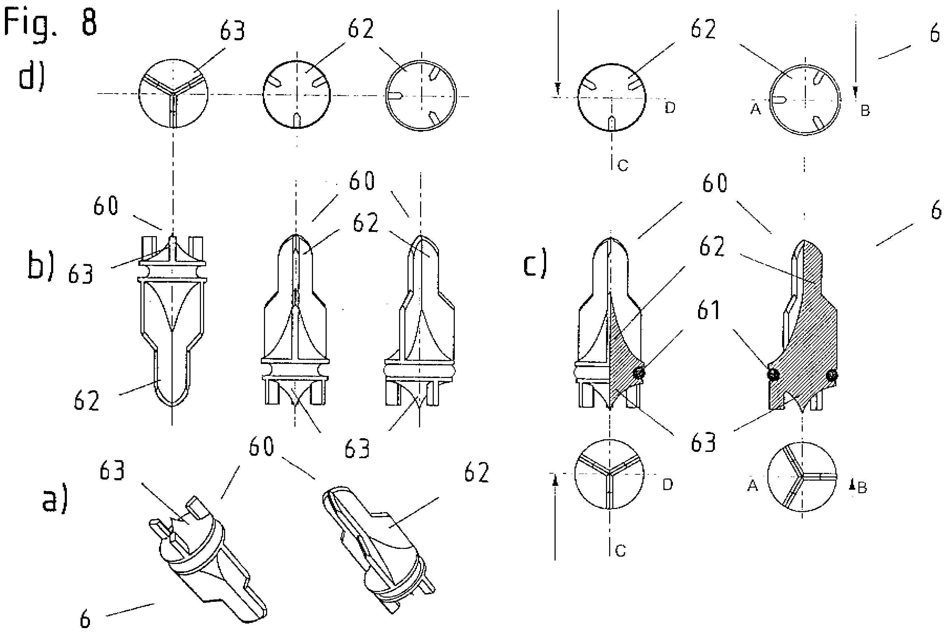

**Fig. 8** beschäftigt sich mit dem kupplungsgesteuerten Ventil **6**, insbesondere mit dem über das Kupplungsstück **7** gesteuerten Wasserstopp **60**. Gemäß den oben dargelegten praktischen Erfahrungen beim Strömungsverhalten von Schlauchverbindungen mit Schlauchverschraubungen **1** ist es angebracht und vorteilhaft, den Wasserstopp **60** im Durchströmkanal **45** beidseitig - schlauchseitig und kupplungsseitig - mit Strömungsprofilen **62** , **63** zu beaufschlagen. Weiterhin stellt es sich als vorteilhaft dar, derartige Schlauchverschraubungen **1** stets mit dem Wasserstopp **60** anzubieten, um dem Anwender den praktischen Umgang mit dem wassertechnischen Gerät bzw. der Anlage zu erleichtern, da ja offensichtlich schon im Entstehungsprozeß der Produkte beim Hersteller Verständnismängel zu verzeichnen sind.

**Fig. 8 a)** zeigt den Wasserstopp **60** in perspektivischer Darstellung von oben und von unten. Die schlauch- und kupplungsseitigen seitlichen Führungen sind je um einen 120°-Winkel versetzt; die Schlauchseite ist außerdem gegenüber der Kupplungsseite um 60° versetzt. Der Versatz trägt zur besseren Führung des Wasserstopps **60** im Durchströmkanal **45** bei. Zwischen der Schlauch- und der Kupplungsseite ist eine Führung zur Aufnahme eines Dicht-/O-Rings **61** angeordnet. Die perspektivischen Darstellungen geben in vorteilhafter Weise den Blick auf die schlauch- und kupplungsseitigen Strömungsprofile **62**, **63** frei.

**Fig. 8 b)** zeigt verschiedene um Winkel gedrehte Seitenansichten des Wasserstopps **60** .

In **Fig. 8 c)** wird nochmals auf die strömungsgünstige Form des Wasserstopps **60** , in schlauch- und kupplungsseitiger Richtung hingewiesen.

Unter **Fig. 8 d)** wird eine Sammlung von Draufsichten aus vorangegangenen Darstellungen des Wasserstopps **60** angeboten.
- 22: Schlauchtyp 1/2" x 1,5 mm
- 23: Schlauchtyp 1/2" x 2,2 mm
- 24: Mittelachse
- 3: Schlauchaufnahme
- 30: Schlauchanschluß
- 31: Grundkörper der Schlauchaufnahme
- 32: Rohransatz
- 33: Rohrstutzen
- 34: Steg
- 35: Nockenteil
- 36: Greifverzahnung
- 37: Ringraum
- 38: Außengewinde
- 39: Druckschraube/-mutter
- 40: Innengewinde
- 41: Schraubrichtung Schlauchhaltung
- 42: Klemmeinrichtung
- 43: Dichtmanschette (nicht dargestellt)
- 44: Ringwulst
- 45: Durchströmkanal
- 5: Kupplung
- 50: Grundkörper der Kupplung

- 51: Kupplungsrückteil
- 52: Kupplungsvorderteil
- 53: Trennstelle
- 54: Griffmulde
- 55: Sicherungsring
- 56: Drucktaste
- 57: Querschnitt, V-/keilförmig
- 58: Ringspalt
- 59: Einführung
- 6: Ventil, kupplungsgesteuert
- 60: Wasserstopp
- 61: Dicht-/O-Ring
- 62: Strömungsprofil, schlauchseitig
- 63: Strömungsprofil, kupplungsseitig
- 7: Kupplungsstück
- 70: Kupplungsstück, ohne Anschluß
- 71: Vorsprung
- 72: Vertiefung

## Patentansprüche

1. Schlauchverschraubung, insbesondere für die Wassertechnik in häuslicher Umgebung oder Anwendungen im Kleingewerbe und Gewerbe, bestehend aus einem Wasserstopp (6), einer Schlauchaufnahme (3) und einer Kupplung (5), wobei die Schlauchaufnahme (3) aus einem hohlzylinderförmigen Grundkörper (31) mit einem inneren Rohransatz (32) zum Aufstecken eines Schlauchs (2, 20), wobei der Rohransatz (32) einen Ringraum (37) zum Schlauchanschluss freigibt, und einem äußeren Rohrstutzen (33) besteht, welcher in einer Klemmeinrichtung (42) ausläuft, welche aus mehreren über den Stutzenumfang verteilten Stegen (34) mit Nocken (35) und Greifverzahnung (36) besteht und somit fingerartig ausgebildet ist, wobei die fingerartig ausgebildete Klemmeinrichtung (42) auf ihrer dem Schlauch (2, 20) in radialer Richtung abgewandten Seite einen ringförmigen Wulst (44) aufweist und eine hohlzylinderförmige Druckschraube/-mutter (39) über den Rohransatz (32) und den Ringraum (37) aufziehbar ist,
**dadurch gekennzeichnet,**
**dass** in axialer Bewegungsrichtung die Druckschraube/-mutter (39) durch die schlauchseitige Berandung des Kupplungsrückteils (51) des Grundkörpers (50) der Kupplung (5) und durch die Klemmeinrichtung (42) mit festgesetztem Schlauch (2, 20) als weiterer Anschlag festgelegt ist, um die Druckschraube/-mutter (39) stets lagegerecht und unverlierbar zu halten, wobei jeder Nocken (5) der fingerartigen Klemmeinrichtung (42) ein Nockenteil aufweist und wobei jedes Nockenteil (35) mit seiner äußeren Umfangsfläche in den ringförmigen Wulst (44) übergeht, der rund ausgebildet ist und an dem im rückwärtigen Bereich, welche der Kupplung (5) zugewandt ist, die Druckschraube/-mutter (39) unmittelbar anliegt.

2. Schlauchverschraubung nach Anspruch 1,
**dadurch gekennzeichnet,**
**dass** die der Innenseite der hohlzylinderförmigen Druckschraube/-mutter (39) zugewandte zylinderförmige Fläche der ringförmigen Wulst (44) so geformt ist, dass der über den Rohransatz (32) durch den Ringraum (37) aufgezogene und durch die in axialer Richtung schlauchseitig selbsthaltend verfahrene Druckschraube/-mutter (39) mittels Klemmeinrichtung (42) festgesetzte Schlauch (2, 20) bei beliebig geformter Wandbeschaffenheit und Wandstärke fest gegriffen und gehalten wird.

3. Schlauchverschraubung nach Anspruch 1 oder 2,
**dadurch gekennzeichnet,**
**dass** die Steigungen des Außengewindes (38) des Grundkörpers (31) der Schlauchaufnahme (3) und des Innengewindes (40) der Druckschraube/- mutter (39) so gestaltet sind, dass der mittels Klemmeinrichtung (42) festgesetzte Schlauch (2, 20) mit weniger als einer relativen Umdrehung zwischen Druckschraube/-mutter (39) und Grundkörper bei beliebig ausgeführter Wandbeschaffenheit und Wandstärke fest gegriffen und gehalten wird.

4. Schlauchverschraubung nach einem der Ansprüche 1, 2 oder 3,
**dadurch gekennzeichnet,**
**dass** je nach Gewindetyp des Außengewindes (38) des Grundkörpers (31) der Schlauchaufnahme (3) und des Innengewindes (40) der Druckschraube/-mutter (39) - wie Rechts- oder Linksgewinde - , der mittels Klemmeinrichtung (42) festgesetzte Schlauch (2, 20) durch Rechts- oder Linksdrehung als relative Umdrehung zwischen Druckschraube/-mutter (39) und Grundkörper (31) der Schlauchaufnahme (3) bei beliebig ausgeführter Wandbeschaffenheit und Wandstärke fest gegriffen und gehalten ist und gemäß einer Drehung in umgekehrter Richtung lösbar ist.

## Claims

1. Threaded hose coupling, in particular for the water system in a home area or applications in small trades and trades, consisting of a water stop (6), a hose retainer (3) and a coupling (5), wherein the hose retainer consists of a hollow-cylindrical basic body (31) with an inner pipe socket (32) for slipping on a hose (2, 20), the pipe socket (32) exposing an annulus (37) to the hose connection, and of an outer socket piece (33) which ends in a clamping means (42) consisting of a plurality of webs (34) distributed around the periphery of the socket piece and having cams (35) and a grip interlocking (36) and thus being of a finger-type design, wherein the clamping means (42) of a finger-type design has an annular swelling (44) on its side facing away from the hose (2, 20) in a radial direction, and a hollow-cylindrical pressure screw / nut (39) can be slipped over the pipe socket (32) and the annulus (37),
**characterized in**
**that** the pressure screw / nut (39) is fixed in the axial moving direction by the border of the coupling's rear part (51) of the basic body (50) of the coupling (5) on the side of the hose and by the clamping means (42) with the hose (2, 20) being fixed as a further stop to hold the pressure screw / nut (39) in its position and in a captive manner at any time, wherein each cam (5) of the finger-type clamping means (42) has a cam part and wherein each cam part (35) passes over into the annular swelling (44) with its outer circumferential surface, the swelling being designed to be round and the pressure screw / nut (39) directly abutting against it in the rear region facing the coupling (5).

2. Threaded hose coupling according to claim 1,
**characterized in**
**that** the cylindrical surface of the annular swelling (44) facing the inner side of the hollow-cylindrical pressure screw / nut (39) is shaped such that the hose (2, 20) that is slipped over the pipe socket (32) through the annulus (37) and is fixed by the pressure screw / nut (39) moved in the axial direction in a self-retaining manner on the side of the hose by means of the clamping means (42), is firmly gripped and held with the wall being of any arbitrary wall structure of an arbitrary shape and any wall thickness.

3. Threaded hose coupling according to claim 1 or 2,
**characterized in**
**that** the pitches of the external thread (38) of the basic body (31) of the hose retainer (3) and the internal thread (40) of the pressure screw / nut (39) are designed such that the hose (2, 20) fixed by means of the clamping means (42) is firmly gripped and held with less than one relative rotation between the pressure screw / nut (39) and the basic body with the wall being of any arbitrary wall structure of an arbitrary design and any wall thickness.

4. Threaded hose coupling according to one of claims 1, 2 or 3,
**characterized in**
**that** depending on the type of thread of the external thread (38) of the basic body (31) of the hose retainer (3) and the internal thread (40) of the pressure screw / nut (39) - such as a right-hand thread or a left-hand thread - the hose (2, 20) fixed by means of the clamping means (42) is firmly gripped and held by a right-hand or a left-hand rotation as a relative rotation between the pressure screw / nut (39) and the basic body (31) of the hose retainer (3) with the wall being of any arbitrary wall structure of an arbitrary design and any wall thickness and is releasable according to a rotation in the reverse direction.

## Revendications

1. Raccord de tuyau à visser, en particulier pour le génie hydraulique en environnement domestique ou les applications dans la petite entreprise et le commerce, constitué d'un arrêt d'eau (6), d'un logement de tuyau (3) et d'un accouplement (5), dans lequel le logement de tuyau (3) est constitué d'un corps de base (31) de forme cylindrique creuse doté d'un manchon de raccord (32) intérieur destiné à l'enfichage d'un tuyau (2, 20), dans lequel le manchon de raccord (32) libère un espace annulaire (37) pour raccorder le tuyau, et d'un embout (33) extérieur, lequel débouche dans un moyen de serrage (42), lequel est constitué de plusieurs traverses (34) réparties sur le pourtour de l'embout dotées de cames (35) et d'une denture de saisie (36) et est ainsi réalisé en forme de doigt, dans lequel le moyen de serrage (42) réalisé en forme de doigt comporte un bourrelet annulaire (44) sur son côté se détournant du tuyau (2, 20) dans la direction radiale et un(e) écrou/vis de pression (39) de forme cylindrique creuse peut être tiré(e) par-dessus le manchon de raccord (32) et l'espace annulaire (37),
**caractérisé en**
**ce que** dans la direction de mouvement axiale l'écrou/vis de pression (39) est immobilisé(e) par la bordure côté tuyau de la partie arrière d'accouplement (51) du corps de base (50) de l'accouplement et par le moyen de serrage (42) avec le tuyau fixé (2, 20) comme butée supplémentaire, afin de maintenir l'écrou/vis de pression (39) constamment dans la bonne position et de manière imperdable, dans lequel chaque came (5) du moyen de serrage (42) en forme de doigt comporte une partie de came et dans lequel chaque partie de came (35) dépasse avec sa surface périphérique extérieure dans le bourrelet annulaire (44), lequel est réalisé circulaire et sur lequel s'appuie directement l'écrou/vis de pression (39) dans la zone arrière tournée vers l'accouplement (5).

2. Raccord de tuyau à visser selon la revendication 1,
**caractérisé en**
**ce que** la surface cylindrique, tournée vers la face interne de l'écrou/vis de pression (39) de forme cylindrique creuse, du bourrelet annulaire (44) est formée de telle sorte que le tuyau (2, 20) tiré à travers par l'espace annulaire (37) au-dessus du manchon de raccord (32) et immobilisé par l'écrou/vis de pression (39), déplacé dans la direction axiale de manière autoretenue côté tuyau, au moyen du moyen de serrage (42) est saisi et maintenu fixe pour une nature et une épaisseur de paroi de forme quelconque.

3. Raccord de tuyau à visser selon la revendication 1 ou 2,
**caractérisé en**
**ce que** les pentes du filet extérieur (38) du corps de base (31) du logement de tuyau (3) et du filet intérieur (40) de l'écrou/vis de pression (39) sont configurées de telle sorte que le tuyau (2, 20) immobilisé au moyen du moyen de serrage (42) est saisi et maintenu fixe pour une nature et une épaisseur de paroi de forme quelconque avec moins d'une rotation relative entre l'écrou/vis de pression (39) et le corps de base.

4. Raccord de tuyau à visser selon l'une des revendications 1, 2 ou 3,
**caractérisé en**
**ce que** selon le type de filet du filet extérieur (38) du corps de base (31) du logement de tuyau (3) et du filet intérieur (40) de l'écrou/vis de pression (39), comme un filetage à droite ou à gauche, le tuyau (2, 20) immobilisé au moyen du moyen de serrage (42) est saisi et maintenu fixe pour une nature et une épaisseur de paroi de forme quelconque par rotation à droite ou à gauche comme rotation relative entre l'écrou/vis de pression (39) et le corps de base (31) du logement de tuyau (3) et est détachable selon une rotation dans la direction opposée.
